(19) Europäisches Patentamt
European Patent Office
Office européen des brevets

(11) EP 4 340 095 B1

(12) EUROPEAN PATENT SPECIFICATION

(45) Date of publication and mention of the grant of the patent:
**18.02.2026 Bulletin 2026/08**

(21) Application number: **22890483.5**

(22) Date of filing: **07.11.2022**

(51) International Patent Classification (IPC):
***H01M 4/131*** *(2010.01)* ***H01M 4/36*** *(2006.01)*
***H01M 4/525*** *(2010.01)* ***H01M 10/0525*** *(2010.01)*
***H01M 10/0567*** *(2010.01)* *H01M 4/02 (2006.01)*

(52) Cooperative Patent Classification (CPC):
**H01M 4/366; H01M 4/131; H01M 4/525; H01M 10/0525; H01M 10/0567;** H01M 2004/028; H01M 2300/0025; Y02E 60/10

(86) International application number:
**PCT/KR2022/017379**

(87) International publication number:
**WO 2023/080752 (11.05.2023 Gazette 2023/19)**

(54) **LITHIUM SECONDARY BATTERY**

LITHIUMSEKUNDÄRBATTERIE

BATTERIE SECONDAIRE AU LITHIUM

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **08.11.2021 KR 20210152273**
**04.11.2022 KR 20220146338**

(43) Date of publication of application:
**20.03.2024 Bulletin 2024/12**

(73) Proprietor: **LG Energy Solution, Ltd.**
**Seoul 07335 (KR)**

(72) Inventors:
- **YEOM, Chul Eun**
  **Daejeon 34122 (KR)**
- **LEE, Kyung Mi**
  **Daejeon 34122 (KR)**
- **HAN, Jung Gu**
  **Daejeon 34122 (KR)**
- **LEE, Jung Min**
  **Daejeon 34122 (KR)**
- **LEE, Chul Haeng**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:

| | |
|---|---|
| **EP-A1- 4 040 558** | **WO-A1-2021/167360** |
| **CN-A- 109 461 967** | **CN-B- 108 598 488** |
| **JP-B2- 5 369 568** | **KR-A- 20160 040 118** |
| **KR-A- 20170 133 949** | **KR-A- 20200 141 019** |
| **KR-A- 20210 059 233** | **US-A1- 2020 259 172** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 340 095 B1

**Description**

TECHNICAL FIELD

Technical Field

The present disclosure relates to a lithium secondary battery with improved high-temperature durability and cycle characteristics under high voltage.

**BACKGROUND ART**

There is a need to develop technology for efficiently storing and utilizing electrical energy as personal IT devices and computer networks are developed with the recent development of information society and the accompanying dependency of society as a whole on the electrical energy is increased.

Particularly, studies of lithium ion batteries, which are in the spotlight as clean energy with low carbon dioxide emissions, have been extensively conducted as an interest in solving environmental problems and realizing a sustainable circular society emerges.

Since the lithium ion batteries may be miniaturized to be applicable to a personal IT device and have high energy density and operating voltage, the lithium ion batteries are employed not only as power sources of notebook computers and mobile phones, but also as power sources for power storage and power sources for electric vehicles.

One of positive electrode active materials for a lithium secondary battery currently being actively researched and used may include a lithium cobalt-based positive electrode active material such as $LiCoO_2$ having a layered structure. $LiCoO_2$ is the most widely used because it is easy to be synthesized and has excellent electrochemical performance including life characteristics, but, since it has low structural stability, there is a limitation in that it is applied to high-capacity battery technology.

Furthermore, as a high-capacity battery is recently required, an active material with high energy per unit volume of the battery is required. In order to satisfy these conditions, packing density of the active material must be high, wherein an active material having a large particle diameter is advantageous to increase the packing density. However, with respect to large-diameter lithium cobalt-based oxide particles, there has been a problem in that an active region in contact with an electrolyte solution is narrow due to a relatively low surface area and rate capability and initial capacity are low because lithium transfer rate is low due to its two-dimensional layered structure.

Accordingly, a technique of forming a lithium defect portion on a surface of the lithium cobalt-based oxide by adding a dopant having high reactivity with lithium to react with the lithium on a surface portion during preparation of the lithium cobalt-based oxide has been proposed.

However, the lithium cobalt-based positive electrode active material having the above-described lithium defect portion had no problem when used in a battery operated at a voltage of less than 4.45 V, but, when used in a battery operated at a voltage of 4.45V or higher, gas and cobalt dissolution occurred rapidly due to a side reaction with the electrolyte solution, and, as a result, since life characteristics and high-temperature storability were significantly degraded, it was found that it was not possible to use the lithium cobalt-based positive electrode active material in the battery operated at 4.45V or higher.

Thus, there is a need to develop a lithium secondary battery capable of improving cycle characteristics by suppressing the gas and cobalt dissolution even during operation at 4.45V or higher.

Documents CN 108 598 488 B, CN 109 461 967 A, WO 2021/167360 A1, KR 2021 0059233 A and JP 5 369568 B2 disclose non-aqueous electrolyte compositions for lithium secondary batteries, comprising a lithium salt dissolved in an organic solvent, and an additive mixture including 1,4-dicyano-2-butene (DCB) and optionally also lithium difluorophosphate (LiDFP).

Document KR 2020 0141019 A refers to the combined use of dinitrile or trinitrile compounds and LiDFP as electrolyte additives in a lithium secondary battery.

Documents US 2020/259172 A1, KR 2016 0040118 A and KR 2017 0133949 A describe lithium secondary batteries comprising a positive electrode active material having a core-shell structure, wherein the core portion includes a doped lithium cobalt oxide and the shell portion includes a doped lithium cobalt oxide of different composition.

DISCLOSURE OF THE INVENTION

TECHNICAL PROBLEM

An aspect of the present disclosure provides a lithium secondary battery which may achieve excellent high-temperature durability and cycle characteristics by using a positive electrode including a lithium cobalt-based oxide

containing a doping element in a specific concentration range, as a positive electrode active material, in combination with a non-aqueous electrolyte solution containing an additive capable of forming a highly durable film on a surface of the electrode.

## TECHNICAL SOLUTION

According to an embodiment, the present disclosure provides a lithium secondary battery including:

a positive electrode including a positive electrode active material,
a negative electrode including a negative electrode active material,
a separator disposed between the positive electrode and the negative electrode, and
a non-aqueous electrolyte solution for a lithium secondary battery,
wherein the positive electrode active material includes a core including a lithium cobalt-based oxide represented by Formula 1; and a shell including a lithium cobalt-based oxide represented by Formula 2 which is disposed on a surface of the core, wherein the core and the shell include at least one doping element selected from the group consisting of aluminum (Al), zirconium (Zr), magnesium (Mg), and titanium (Ti), and
the non-aqueous electrolyte solution includes a lithium salt, an organic solvent, lithium difluorophosphate, and a dinitrile-based compound represented by Formula 3.

[Formula 1] $Li_aCO_{1-b}M_bO_2$

wherein, in Formula 1, [0023] M is at least one selected from the group consisting of Al, Zr, Mg, and Ti, and $1 \le a \le 1.2$ and $0.005 \le b \le 0.05$.

[Formula 2] $Li_xCo_{1-y}M^1_yO_2$

wherein, in Formula 2,
$M^1$ is at least one selected from the group consisting of Al, Zr, Mg, and Ti, and
$0.5 \le x < 1$and $0 \le y \le 0.002$.

[Formula 3]

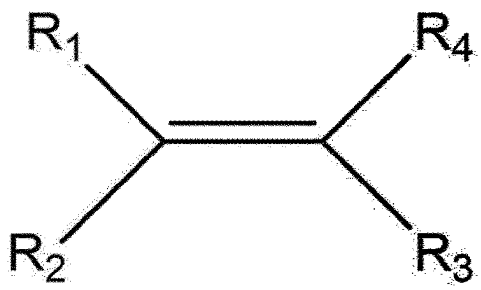

wherein, in Formula 3,
$R^1$, $R^2$, $R^3$, and $R^4$ are each independently hydrogen, an alkyl group having 1 to 10 carbon atoms, or -R-CN, wherein R is an alkylene group having 1 to 12 carbon atoms,
at least one of $R^1$ and $R^2$ is -R-CN, and
at least one of $R^3$ and $R^4$ is -R-CN.

The doping element may be present in a concentration gradient that decreases from a center of the core toward an interface between the core and the shell.

The doping element includes zirconium (Zr), and may optionally further include at least one selected from the group consisting of aluminum (Al), magnesium (Mg), and titanium (Ti).

Specifically, the zirconium (Zr) among the doping elements is present in an amount of 0.025 wt% to 0.085 wt% based on a total weight of the positive electrode active material.

Also, the aluminum (Al) among the doping elements may be present in an amount of 0.5 wt% to 0.55 wt% based on the total weight of the positive electrode active material, the magnesium (Mg) among the doping elements may be present in an amount of 0.1 wt% to 0.15 wt% based on the total weight of the positive electrode active material, and the

titanium (Ti) among the doping elements may be present in an amount of 0.01 wt% to 0.05 wt% based on the total weight of the positive electrode active material.

The lithium difluorophosphate may be present in an amount of 0.1 wt% to 1.5 wt% based on a total weight of the non-aqueous electrolyte solution for a lithium secondary battery.

The lithium difluorophosphate and the dinitrile-based compound may be included in a weight ratio of 1:0.25 to 1:3.

## ADVANTAGEOUS EFFECTS

Since a lithium secondary battery of the present disclosure may secure structural stability of a positive electrode active material and may simultaneously form a highly durable film on a surface of a positive electrode by using the positive electrode including a lithium cobalt-based oxide containing a doping element in a specific concentration range, as the positive electrode active material, in combination with a non-aqueous electrolyte solution containing a dinitrile-based compound and lithium difluorophosphate as an additive, an increase in interfacial resistance may be minimized and a side reaction between the positive electrode and the electrolyte solution may be prevented, and thus, an effect of improving high-temperature storage characteristics, high-temperature durability, and cycle characteristics may be maximized.

The lithium secondary battery of the present disclosure is particularly suitable for an automotive battery requiring high operating voltage and high output characteristics.

## MODE FOR CARRYING OUT THE INVENTION

Hereinafter, examples of the present disclosure will be described in detail with reference to the accompanying drawings in such a manner that it may easily be carried out by a person with ordinary skill in the art to which the present disclosure pertains. The invention may, however, be embodied in many different forms and should not be construed as being limited to the examples set forth herein.

As a result of repeated research to develop a lithium secondary battery with improved high-temperature storage characteristics and cycle characteristics, the present inventors have found that overall performance of the secondary battery may be improved by using a positive electrode including a lithium cobalt-based oxide containing a doping element in a specific concentration range, as a positive electrode active material, in combination with a non-aqueous electrolyte solution containing an additive of a specific composition, thereby leading to the completion of the present disclosure.

A lithium secondary battery of the present disclosure according to an embodiment includes:

a positive electrode including a positive electrode active material,
a negative electrode including a negative electrode active material,
a separator disposed between the positive electrode and the negative electrode, and
a non-aqueous electrolyte solution for a lithium secondary battery,
wherein the positive electrode active material includes a core including a lithium cobalt-based oxide represented by Formula 1; and a shell including a lithium cobalt-based oxide represented by Formula 2 which is disposed on a surface of the core, wherein the core and the shell include at least one doping element selected from the group consisting of aluminum (Al), zirconium (Zr), magnesium (Mg), and titanium (Ti), and
the non-aqueous electrolyte solution includes a lithium salt, an organic solvent, lithium difluorophosphate, and a dinitrile-based compound represented by Formula 3.

[Formula 1] $Li_aCO_{1-b}M_bO_2$

In Formula 1,

M is at least one selected from the group consisting of Al, Zr, Mg, and Ti, and
$1 \leq a \leq 1.2$ and $0.005 \leq b \leq 0.05$

[Formula 2] $Li_xCo_{1-y}M^1_yO_2$

In Formula 2,

$M^1$ is at least one selected from the group consisting of Al, Zr, Mg, and Ti, and
$0.5 \leq x < 1$ and $0 \leq y \leq 0.002$

[Formula 3]

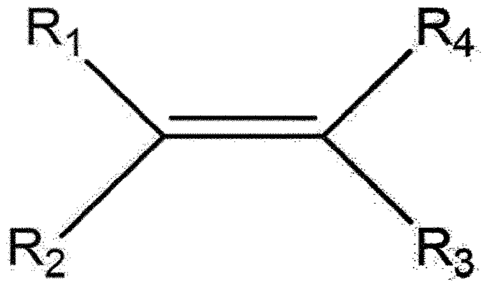

In Formula 3,

$R^1$, $R^2$, $R^3$, and $R^4$ are each independently hydrogen, an alkyl group having 1 to 10 carbon atoms, or -R-CN, wherein R is an alkylene group having 1 to 12 carbon atoms,
at least one of $R^1$ and $R^2$ is -R-CN, and
at least one of $R^3$ and $R^4$ is -R-CN.

Hereinafter, a configuration of the lithium secondary battery of the present disclosure will be described in detail.

**(1) Positive Electrode**

The positive electrode according to the present disclosure may include a positive electrode active material layer including a positive electrode active material, and, if necessary, the positive electrode active material layer may further include a conductive agent and/or a binder.

The positive electrode active material has a core-shell structure in which a core is located at a center of a particle and a shell is disposed on an outer surface of the core, wherein the core and the shell may be divided according to a concentration of a doping element.

Specifically, the positive electrode active material includes a core including a lithium cobalt-based oxide represented by Formula 1 below; and a shell including a lithium cobalt-based oxide represented by Formula 2 which is disposed on the surface of the core, wherein the core and shell may include at least one doping element selected from the group consisting of Al, Zr, Mg, and Ti.

[Formula 1] $Li_aCO_{1-b}M_bO_2$

In Formula 1,

M is at least one selected from the group consisting of Al, Zr, Mg, and Ti, and
$1 \leq a \leq 1.2$ and $0.005 \leq b \leq 0.05$

[Formula 2] $Li_xCo_{1-y}M^1_yO_2$

In Formula 2,

$M^1$ is at least one selected from the group consisting of Al, Zr, Mg, and Ti, and
$0.5 \leq x < 1$ and $0 \leq y \leq 0.002$

In Formula 1, a represents a lithium atomic ratio in the lithium cobalt-based oxide of Formula 1, wherein a may satisfy $1 \leq a \leq 1.2$, preferably, $1 \leq a \leq 1.1$.

Also, in Formula 1, b represents an atomic ratio of the doping element M in the lithium cobalt-based oxide of Formula 1,wherein b may satisfy $0.001 \leq b \leq 0.05$, preferably, $0.01 \leq b \leq 0.02$. In a case in which the atomic ratio of the doping element in the lithium cobalt-based oxide forming a core portion satisfies the above range, since structural stability of the positive electrode active material is improved, phase transition to monoclinic does not occur during charge and discharge and gas generation and cobalt dissolution may be reduced even when operated at a high voltage of 4.45 V or higher.

Furthermore, in Formula 2, x represents a lithium atomic ratio in the lithium cobalt-based oxide of Formula 2,

wherein x may satisfy $0.5 \le x < 1$, preferably $0.55 \le x < 1$, and more preferably $0.9 \le x \le 0.99$. In a case in which the lithium atomic ratio in the lithium cobalt-based oxide of a shell portion satisfies the above range, the lithium cobalt-based oxide of the shell portion has a three-dimensional crystal structure such as a spinel-like structure, and, as a result, movement speed of lithium ions in the shell portion is increased to improve output characteristics and rate capability.

Also, in Formula 2, y represents an atomic ratio of the doping element in the lithium cobalt-based oxide of Formula 2, wherein y may satisfy $0 \le y \le 0.002$, preferably, $0.0005 \le y \le 0.0017$.It is desirable that the lithium cobalt-based oxide forming the shell portion contains a smaller amount of the doping element than the lithium cobalt-based oxide forming the core portion or contains a trace amount of the doping element.

Specifically, a concentration of cobalt included in the positive electrode active material may be increased while having a continuous concentration gradient from the center of the active material particle to the surface of the particle, or may be constant from the center of the positive electrode active material particle to the surface thereof. As described above, in a case in which the concentration gradient, in which the concentration of the cobalt remains high at the center of the active material particle and the concentration increases toward a surface side, is included, a decrease in capacity may be prevented.

In this case, in the present disclosure, 'having a concentration gradient' means that a concentration of a metal or the like is present in a concentration distribution that gradually changes in one direction over an entire particle.

Also, since the positive electrode active material of the present disclosure rapidly forms the particle from the center of the core as the doping element having a strong binding force with oxygen is introduced, it may have a concentration gradient in which the concentration of the doping element is decreased from the center of the core toward an interface between the core and the shell.

Specifically, the positive electrode active material may include the doping element in the core located at the center of the particle, and may include a small amount or a trace amount of the doping element may be included in the shell.

The doping element may include zirconium (Zr), and may optionally further include at least one selected from the group consisting of aluminum (Al), magnesium (Mg), and titanium (Ti). Also, the doping element may include zirconium (Zr) and aluminum (Al), and may optionally include at least one selected from the group consisting of magnesium (Mg) and titanium (Ti).

Specifically, the zirconium (Zr) among the doping elements is substituted for a lithium (Li) ion site in a layered structure to be located in a vacant site from which a Li ion is escaped during discharge. Accordingly, stress accompanying expansion and contraction of the positive electrode active material may be reduced to increase stability of the active material. That is, a c-axis lattice constant may be increased to improve efficiency characteristics and life characteristics of the battery. In this case, a weight ratio of the zirconium (Zr) to a total weight of the positive electrode active material may be in a range of 0.025 wt% to 0.085 wt%, specifically 0.03 wt% to 0.08 wt%, and more preferably 0.03 wt% to 0.06 wt%. In a case in which the amount of the Zr in the positive electrode active material satisfies the above range, cycle performance may be further improved, and a decrease in discharge capacity may be prevented.

Furthermore, the aluminum (Al) among the doping elements is a component capable of improving high-temperature durability by suppressing the cobalt (Co)dissolution, wherein the aluminum may be present in an amount of 0.5 wt% to 0.55 wt%, specifically, 0.51 wt% to 0.55 wt% based on the total weight of the positive electrode active material. In a case in which the amount of the Al in the positive electrode active material satisfies the above range, the cycle performance may be further improved and the decrease in discharge capacity may be prevented.

The magnesium (Mg) among the doping elements is a component capable of increasing durability at high voltage by stabilizing the structure of the positive electrode active material, wherein the magnesium may be present in an amount of 0.1 wt% to 0.15 wt%, specifically, 0.11 wt% to 0.15 wt% based on the total weight of the positive electrode active material.

The titanium (Ti) among the doping elements increases crystallinity by being substituted for a Me-O site in the layered structure, and may accordingly increase a lattice constant of a-axis to improve the life characteristics of the battery through stabilization and an increase in the crystallinity of the layered structure. The titanium may be present in an amount of 0.01 wt% to 0.05 wt%, specifically 0.01 wt% to 0.05 wt%, and specifically 0.01 wt% to 0.04 wt% based on the total weight of the positive electrode active material.

Since the positive electrode active material of the present disclosure includes at least one doping element selected from the group consisting of Al, Zr, Mg, and Ti, the structural stability of the positive electrode active material may be secured and a side reaction may simultaneously be prevented by reducing surface exposure of the positive electrode active material, and thus, an increase in interfacial resistance of the positive electrode active material may be minimized and, furthermore, effects of capacity characteristics and high-temperature durability of the battery may be improved. Particularly, in a case in which the concentrations of the elements, such as Al, Zr, Mg, and/or Ti, in the positive electrode active material satisfy the above ranges, both an effect of increasing durability and an effect of surface modification of the positive electrode active material may be secured.

With respect to the positive electrode active material of the present disclosure, since the doping element having a strong binding force with oxygen forms the particle at the center and the positive electrode active material has a concentration gradient in which the concentration of the doping element is decreased from the center toward the surface,

a side reaction with the electrolyte solution may be increased during operation due to an insufficient concentration of the doping element on the surface of the positive electrode active material, or structural collapse of the positive electrode active material may be caused. Thus, in the present disclosure, since the side reaction between the positive electrode and the electrolyte solution is prevented by using a non-aqueous electrolyte solution containing an additive capable of forming a stable film on the surface of the positive electrode in combination as will be described later, an effect of improving the high-temperature storage characteristics and cycle characteristics may be achieved.

The positive electrode active material of the present disclosure may be formed according to a conventional method.

Specifically, a solid-phase method may be performed in which, after a first lithium cobalt-based oxide and a doping source are mixed and a first heat treatment is performed to form a core portion including the lithium cobalt-based oxide represented by Formula 1, the obtained lithium cobalt-based oxide represented by Formula 1 is mixed with a second lithium cobalt-based oxide and optionally a doping source and a secondary heat treatment is performed to form a shell portion. In this case, a mixing ratio of the doping source may be appropriately adjusted so that the lithium cobalt-based oxides in the form of core and shell, which are represented by Formulae 1 and/or 2, may be formed. Specifically, during the formation of the core portion, the lithium cobalt-based oxide and the doping source may be mixed in amounts such that an atomic ratio of Li/(Co+M) of the core portion is in a range of 1.0 to 1.2, specifically, 1.0 to 1.1.The lithium cobalt-based oxide and the doping source may be added collectively at once, or may be added dividedly with a time difference so as to decrease the Li/(Co+M)atomic ratio. In the case of the latter, a core portion having a concentration gradient, in which the concentration of the lithium is decreased from the center of the core portion toward the surface, may be formed.

Also, during the formation of the shell portion, a lithium cobalt-based oxide, in which the atomic ratio of Li/(Co+M) is less than 1, is formed while lithium present on the surface of the lithium cobalt-based oxide represented by Formula 1 reacts with the second lithium cobalt-based oxide and/or the source. In this case, the second lithium cobalt-based oxide may be mixed in an amount such that the atomic ratio of Li/(Co+M) of the shell portion is in a range of 0.50 or more to less than 1, preferably 0.55 or more to less than 1, and more preferably 0.90 to 0.99. The first lithium cobalt-based oxide and the second lithium cobalt-based oxide may be mixed in amounts such that a ratio of the first lithium cobalt-based oxide/the second lithium cobalt-based oxide is in a range of 0.1 or more to less than 4, more preferably, 0.5 or more to less than 2.The second lithium cobalt-based oxide and/or the doping source may be added collectively at once, or may be added dividedly with a time difference so as to decrease the Li/(Co+M) atomic ratio. In the case of the latter, a core portion having a concentration gradient, in which the concentration of the lithium is decreased from the center of the core portion toward the surface, may be formed.

$LiCoO_2$ may be used as the first and second lithium cobalt-based oxides.

Also, the doping source may be at least one element selected from the group consisting of Al, Zr, Mg, and Ti, or an oxide, hydroxide, oxyhydroxide, halide, nitrate, carbonate acetate, oxalate, citrate, or sulfate including the element, and any one thereof or a mixture of two or more thereof may be used.

Specifically, an oxide containing Al, for example, $Al(NO_3)_3 \cdot 9H_2O$ may be used as the Al source.

An oxide containing Zr, for example, $Zr(NO_3)_2 \cdot xH_2O$ (x is an integer of 1 to 6) may be used as the Zr source.

An oxide containing Mg, for example, MgO may be used as the Mg source.

An oxide containing Ti, for example, $TiO_2$ may be used as the Ti source.

A mixing amount of each source may be used in an amount capable of achieving a concentration range contained in a coating layer to be finally prepared.

Furthermore, a heat treatment temperature during the heat treatment, a mixing speed, and a doping element ratio may be adjusted to have a desired doping element concentration from the center of a precursor particle in a surface direction.

Specifically, it is desirable that the first and second heat treatments are performed at a temperature of 650°C to 1,100°C, specifically, 850°C to 1,100°C.If the heat treatment temperature is less than 650°C, there are risks of a decrease in discharge capacity per unit weight, a degradation in cycle characteristics, and a decrease in operating voltage due to the remaining of the unreacted doping source, and, if the heat treatment temperature is greater than 1,100°C, there are risks of a decrease in discharge capacity per unit weight, a degradation in cycle characteristics, and a decrease in operating voltage due to the generation of a side reactant by a high-temperature reaction.

Also, it is desirable that the heat treatment is performed in the air or in an oxygen atmosphere, and it is desirable that the heat treatment is performed for 5 hours to 30 hours because a diffusion reaction between particles of the mixture may be sufficiently performed.

As another method, the positive electrode active material may be formed by a method in which, after a doping composition is prepared by dissolving or dispersing doping sources in a solvent, a lithium cobalt-based oxide is surface-treated by using the doping composition, dried, and heattreated at a temperature of 200°C to 600°C.

The surface treatment may use a method, such as coating, spraying, or immersion, or a deposition method such as chemical vapor deposition.

Each of the doping sources may be the same as described above.

Also, as the solvent, any solvent may be used without particular limitation as long as it has no effect on the lithium cobalt-based oxide and is typically used for a surface treatment using a metal raw material, and, specifically, N-methyl pyrrolidone (NMP), acetone, or isopropyl alcohol may be used.

As described above, the lithium secondary battery of the present disclosure includes a core including the lithium cobalt-based oxide represented by Formula 1; and a shell including the lithium cobalt-based oxide represented by Formula 2 which is disposed on the surface of the core, wherein, since the core and the shell include a positive electrode active material containing at least one doping element selected from the group consisting of Al, Zr, Mg, and Ti, the structural stability of the positive electrode active material may be improved even during operation at a high voltage.

In the positive electrode active material according to the present disclosure, a ratio of a radius of the core portion to a thickness of the shell portion, for example, may be in a range of about 1:0.01 to about 1:0.1. In a case in which the thickness of the shell portion is excessively thin, an effect of increasing mobility of lithium ions is insignificant, and, in a case in which the thickness of the shell portion is excessively thick, the structural stability of the active material particle may be reduced. More specifically, the thickness of the shell portion may be in a range of 1 nm to 500 nm, or 10 nm to 450 nm under the condition of the above-described ratio of the radius of the core portion to the thickness of the shell portion.

In addition to the lithium cobalt-based oxide represented by Formula 1 or 2, the positive electrode active material may further include lithium-manganese-based oxide (e.g., $LiMnO_2$, $LiMn_2O_4$, etc.), lithium-nickel-based oxide (e.g., $LiNiO_2$, etc.), lithium-nickel-manganese-based oxide (e.g., $LiNi_{1-y}Mn_yO_2$ (where 0<Y<1), $LiMn_{2-z}Ni_zO_4$ (where 0<Z<2), etc.), or lithium-nickel-cobalt-transition metal (M) oxide (e.g., $Li(Ni_{p2}Co_{q2}Mn_{r3}M_{s2})O_2$ (where M is selected from the group consisting of Al, iron (Fe), vanadium (V), chromium (Cr), Ti, tantalum (Ta), Mg, and molybdenum (Mo), and p2, q2, r3, and S2 are atomic fractions of each independent elements, wherein 0<p2<1, 0<q2<1, 0<r3<1, 0<S2<1, and p2+q2+r3+S2=1)),if necessary.

The positive electrode active material may be included in an amount of 90 wt% to 99 wt%, specifically, 93 wt% to 98 wt% based on a total weight of a solid content in the positive electrode active material layer.

The positive electrode active material layer included in the positive electrode of the present disclosure may further include a conductive agent and/or a binder, if necessary.

The conductive agent is not particularly limited as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent is commonly added in an amount of 1 wt% to 30 wt% based on the total weight of the solid content in the positive electrode active material layer.

The binder is a component that acts to improve the adhesion between positive electrode active material particles and the adhesion between the positive electrode active material and a current collector, wherein the binder is commonly added in an amount of 1 wt% to 30 wt% based on the total weight of the solid content in the positive electrode active material layer. Examples of the binder may be a fluorine resin-based binder including polyvinylidene fluoride (PVDF) or polytetrafluoroethylene (PTFE); a rubber-based binder including a styrenebutadiene rubber (SBR), an acrylonitrilebutadiene rubber, or a styrene-isoprene rubber; a cellulosebased binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The positive electrode of the present disclosure as described above may be prepared by a method of preparing a positive electrode which is known in the art. For example, the positive electrode may be prepared by a method in which a positive electrode collector is coated with a positive electrode slurry, which is prepared by dissolving or dispersing the positive electrode active material, the binder, and/or the conductive agent in a solvent, dried, and then rolled to form a positive electrode active material layer, or a method in which the positive electrode active material layer is cast on a separate support and a film separated from the support is then laminated on the positive electrode collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content in the active material slurry including the positive electrode active material as well as optionally the binder and the conductive agent is in a range of 10 wt% to 70 wt%, preferably,20 wt% to 60 wt%.

### (2) Negative Electrode

Next, a negative electrode will be described.

The negative electrode according to the present disclosure includes a negative electrode active material layer including a negative electrode active material, and the negative electrode active material layer may further include a conductive agent and/or a binder, if necessary.

The negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular,planar, flaky, spherical, or fibrous natural graphite or artificial graphite, and examples of the amorphous carbon may be soft carbon (lowtemperature sintered carbon) or hard carbon, mesophase pitch carbide, and fired cokes.

As the metal or the alloy of lithium and the metal, a metal selected from the group consisting of copper (Cu), nickel (Ni), sodium (Na), potassium (K), rubidium (Rb), cesium (Cs), francium (Fr), beryllium (Be), Mg, calcium (Ca), strontium (Sr), silicon (Si), antimony (Sb), lead (Pb), indium (In), zinc (Zn), barium (Ba), radium (Ra), germanium (Ge), Al, and tin (Sn) or an alloy of lithium and the metal may be used.

One selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0 \le x \le 1$), $Li_xWO_2$ ($0 \le x \le 1$), and $Sn_xMe_{1-x}Me'_yO_z$ (Me: manganese (Mn), Fe, Pb, or Ge; Me': Al, boron (B), phosphorus (P), Si, Groups I, II and III elements of the periodic table, or halogen; $0<x\le 1$; $1\le y\le 3$; $1\le z\le 8$) may be used as the metal composite oxide.

The material, which may be doped and undoped with lithium, may include Si, $SiO_x$ ($0<x<2$), a Si-Y alloy (where Y is an element selected from the group consisting of alkali metal, alkaline earth metal, a Group 13 element, a Group 14 element, transition metal, a rare earth element, and a combination thereof, and is not Si), Sn, $SnO_2$, and Sn-Y (where Y is an element selected from the group consisting of alkali metal, alkaline earth metal, a Group 13 element, a Group 14 element, transition metal, a rare earth element, and a combination thereof, and is not Sn), and a mixture of $SiO_2$ and at least one thereof may also be used. The element Y may be selected from the group consisting of Mg, Ca, Sr, Ba, Ra, Sc, Y, Ti, Zr, hafnium (Hf), rutherfordium (Rf), V, niobium (Nb), Ta, dubnium (Db), Cr, Mo, tungsten (W), seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B,Al, gallium (Ga), Sn, In, Ge, P, arsenic (As), Sb, bismuth (Bi), sulfur (S), selenium (Se), tellurium (Te), polonium (Po), and a combination thereof.

The transition metal oxide may include lithiumcontaining titanium composite oxide (LTO), vanadium oxide, and lithium vanadium oxide.

The negative electrode active material may be included in an amount of 80 wt% to 99 wt% based on a total weight of a solid content in the negative electrode active material layer.

The conductive agent is a component for further improving conductivity of the negative electrode active material, wherein the conductive agent may be added in an amount of 1 wt% to 20 wt% based on the total weight of the solid content in the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The binder is a component that assists in the binding between the conductive agent, the active material, and the current collector, wherein the binder is commonly added in an amount of 1 wt% to 30 wt% based on the total weight of the solid content in the negative electrode active material layer. Examples of the binder may be a fluorine resin-based binder including polyvinylidene fluoride (PVDF) or polytetrafluoroethylene (PTFE); a rubber-based binder including a styrenebutadiene rubber (SBR), an acrylonitrilebutadiene rubber, or a styrene-isoprene rubber;a cellulosebased binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The negative electrode may be prepared according to a method of preparing a negative electrode which is known in the art. For example, the negative electrode may be prepared by a method in which a negative electrode collector is coated with a negative electrode active material slurry, which is prepared by dissolving or dispersing the negative electrode active material as well as optionally the binder and the conductive agent in a solvent, rolled and dried to form a negative electrode active material layer, or may be prepared by casting the negative electrode active material layer on a separate

support and then laminating a film separated from the support on the negative electrode collector.

The negative electrode collector generally has a thickness of 3 μm to 500 μm. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

The solvent may include water or an organic solvent, such as NMP and alcohol, and may be used in an amount such that desirable viscosity is obtained when the negative electrode active material as well as optionally the binder and the conductive agent is included. For example, the solvent may be included in an amount such that a concentration of the solid content including the negative electrode active material as well as optionally the binder and the conductive agent is in a range of 50 wt% to 75 wt%, preferably, 50 wt% to 65 wt%.

### (3) Separator

The lithium secondary battery according to the present disclosure includes a separator between the positive electrode and the negative electrode.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

### (4)Non-aqueous Electrolyte Solution

The non-aqueous electrolyte solution for a lithium secondary battery of the present disclosure may include a lithium salt, an organic solvent, lithium difluorophosphate, and a dinitrile-based compound represented by Formula 3 below.

[Formula 3]

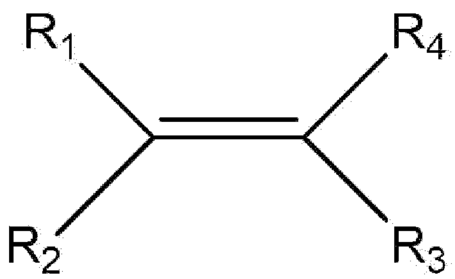

In Formula 3,

$R^1$, $R^2$, $R^3$, and $R^4$ are each independently hydrogen, an alkyl group having 1 to 10 carbon atoms, or -R-CN, wherein R is an alkylene group having 1 to 12 carbon atoms, and one of $R^1$ and $R^2$ and one of $R^3$ and $R^4$ must be -R-CN.

### (4-1) Lithium Salt

Any lithium salt typically used in an electrolyte for a lithium secondary battery may be used as the lithium salt without limitation, and, for example, the lithium salt may include $Li^+$ as a cation, and may include at least one selected from the group consisting of $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_4^-$, $PF_6^-$, $CF_3SO_3^-$, $CH_3CO_2^-$,

$CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$, and $SCN^-$ as an anion.

Specifically, the lithium salt may include a single material selected from the group consisting of LiCl, LiBr, LiI, $LiBF_4$, $LiClO_4$, $LiB_{10}Cl_{10}$, $LiAlCl_4$, $LiAlO_2$, $LiPF_6$, $LiCF_3SO_3$, $LiCH_3CO_2$, $LiCF_3CO_2$, $LiAsF_6$, $LiSbF_6$, $LiCH_3SO_3$, $LiN(SO_2F)_2$ (lithium bis(fluorosulfonyl) imide, LiFSI), $LiN(SO_2CF_2CF_3)_2$ (lithium bis(pentafluoroethanesulfonyl)imide, LiBETI), and $LiN(SO_2CF_3)_2$ (lithium bis(trifluoromethanesulfonyl)imide, LiTFSI) or a mixture of two or more thereof. In addition to them, a lithium salt commonly used in an electrolyte of a lithium secondary battery may be used without limitation.

The lithium salt may be appropriately changed in a normally usable range, but may be included in a concentration of 0.8 M to 3.0 M, specifically, 1.0 M to 3.0 M in the electrolyte to obtain an optimum effect of forming a film for preventing corrosion of the surface of the electrode.

If the concentration of the lithium salt is less than 0.8 M, since mobility of lithium ions is reduced, capacity characteristics may be degraded, and, if the concentration of the lithium salt is greater than 3.0 M, since viscosity of the non-aqueous electrolyte solution is excessively increased, electrolyte impregnability may be reduced and a film-forming effect may be reduced.

**(4-2) Organic Solvent**

Various organic solvents typically used in a lithium electrolyte may be used as the organic solvent without limitation, wherein, specifically, a type thereof is not limited as long as decomposition due to an oxidation reaction during charge and discharge of the secondary battery may be minimized and desired properties may be exhibited together with an additive.

For example, a highly viscous cyclic carbonate-based organic solvent that well dissociates the lithium salt in the electrolyte due to high permittivity may be used as the organic solvent. Also, in order to prepare an electrolyte having higher ionic conductivity, the cyclic carbonate-based organic solvent may be mixed with at least one of a linear carbonate-based organic solvent and a linear ester-based organic solvent and used as the organic solvent.

The cyclic carbonate-based organic solvent is a highly viscous organic solvent which may well dissociate the lithium salt in the electrolyte due to high permittivity, wherein specific examples of the cyclic carbonate-based organic solvent may be at least one organic solvent selected from the group consisting of ethylene carbonate (EC),propylene carbonate (PC), 1,2-butylene carbonate, 2,3-butylene carbonate, 1,2-pentylene carbonate, 2,3-pentylene carbonate, and vinylene carbonate, and, among them, the cyclic carbonate-based organic solvent may include ethylene carbonate.

Also, the linear carbonate-based organic solvent is an organic solvent having low viscosity and low permittivity, wherein, as a representative example, at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate may be used, and the linear carbonate-based organic solvent may specifically include ethyl methyl carbonate (EMC).

Furthermore, specific examples of the linear ester-based organic solvent may be at least one organic solvent selected from the group consisting of methyl acetate, ethyl acetate, propyl acetate, methyl propionate, ethyl propionate, propyl propionate, and butyl propionate.

Specifically, the organic solvent of the present disclosure may use the cyclic carbonate-based organic solvent and at least one of the linear carbonate-based organic solvent and the linear ester-based organic solvent in a volume ratio of 10:90 to 80:20, specifically, 30:70 to 50:50.

A remainder excluding other components except for the organic solvent, for example, the lithium salt, the lithium difluorophosphate, the dinitrile-based compound, and other additives, in the non-aqueous electrolyte solution of the present disclosure may all be the organic solvent unless otherwise stated.

**(4-3) Lithium Difluorophosphate**

The non-aqueous electrolyte solution of the present disclosure may include lithium difluorophosphate as a first additive in order to improve long-term life characteristics of the secondary battery.

The lithium difluorophosphate may form a stable solid electrolyte interphase (SEI) film on a surface of the negative electrode by a lithium ion component which is generated by decomposition during initial charge, and may not only improve Li mobility to the negative electrode for the formation of the SEI film, but may also reduce interfacial resistance. Also, the lithium difluorophosphate may stabilize the positive electrode and may improve discharge characteristics while difluorophosphate anions generated by the decomposition during initial charge are present on the surface of the positive electrode.

The lithium difluorophosphate may be present in an amount of 0.1 wt% to 1.5 wt% based on a total weight of the

non-aqueous electrolyte solution.

If the lithium difluorophosphate is present within the above amount range, since a stable film may be formed to effectively suppress dissolution of transition metal from the positive electrode at a high temperature, excellent high-temperature durability may be achieved. That is, if the lithium difluorophosphate is present in an amount of 0.1 wt% or more in the non-aqueous electrolyte solution, since the film-forming effect is improved to form a stable SEI film even during high-temperature storage, an increase in resistance and a decrease in capacity may be prevented even after the high-temperature storage, and thus, overall performance may be improved. Also, if the lithium difluorophosphate is present in an amount of 1.5 wt% or less, since the increase in resistance may be prevented by preventing an excessively thick film from being formed during initial charge, degradation of initial capacity and output characteristics of the secondary battery may be prevented.

Specifically, the lithium difluorophosphate may be present in an amount of 0.1 wt% to 1.0 wt% based on the total weight of the non-aqueous electrolyte solution.

### (4-4) Dinitrile-based Compound

Also, the non-aqueous electrolyte solution of the present disclosure may include the dinitrile compound represented by Formula 3 as a second additive in order to improve cycle performance and output performance of the secondary battery.

The dinitrile compound represented by Formula 3 is a compound containing at least one polar nitrile group (-CN) having a high dipole moment at both ends, wherein the polar nitrile group is bonded with transition metal ions dissolved from the positive electrode to prevent precipitation of the transition metal ions on surfaces of inorganic particles on an organic-inorganic composite separator. Furthermore, if the dinitrile compound and the transition metal are bonded, that its volume is increased to reduce the mobility in the electrolyte solution is also a factor capable of suppressing a side reaction caused by the transition metal. Particularly, since the dinitrile compound included in the non-aqueous electrolyte solution of the present disclosure contains an unsaturated double bond to further increase a binding force between the nitrile group at both ends and the transition metal, an effect of preventing capture and release of the transition metal is excellent even under high voltage conditions, and thus, the side reaction of the electrolyte solution may be effectively prevented, and safety of the battery may be ensured.

As examples of the dinitrile compound according to the present disclosure, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, and 1,6-dicyano-2-methyl-5-methyl-3-hexene may be used alone or may be used in a mixture of two or more thereof, and the dinitrile compound may specifically include 1,4-dicyano-2-butene.

In the dinitrile compound, two or more nitrile groups may have a cis or trans position based on a double bond, and may preferably have a trans position.

Furthermore, since the dinitrile-based compound further includes a double bond in the middle of a structure in comparison to succinonitrile or adiponitrile which is a conventional nitrile-based additive, it may form a film in the form of an organic polymer through oxidative decomposition of the double bond and may simultaneously form a highly stable ion conductive film while forming a ligand or complex structure by strong bonding with the metal ions on the surface of the positive electrode. As a result, the side reaction between the electrolyte and the positive electrode may be prevented, and the gas generation may be suppressed. Furthermore, since a lone electron pair of nitrogen (N) of the nitrile group stabilizes the anions of the lithium salt to suppress the generation of HF due to decomposition of the lithium salt, the high-temperature storage characteristics of the secondary battery may be further improved.

In a case in which the dinitrile-based compound is included alone as a non-aqueous electrolyte solution additive, there is an advantage in that the cycle characteristics and high-temperature storage characteristics may be improved, but, in a case in which the dinitrile-based compound is included in a specific amount range, there is a disadvantage in that the cycle characteristics are degraded due to a significant increase in resistance. In the present disclosure, in order to improve this problem, since the lithium difluorophosphate compound capable of reducing battery resistance is used as an essential electrolyte solution additive component together with the dinitrile-based compound in a specific combination ratio, the increase in resistance may be suppressed due to a synergistic effect of these additives and the degradation of the cycle characteristics may be improved.

Specifically, the non-aqueous electrolyte solution of the present disclosure may include the lithium difluorophosphate and the dinitrile-based compound in a weight ratio of 1:0.25 to 1:3.

If the lithium difluorophosphate and the dinitrile-based compound are included in the above amount ratio, since the dissolution of the transition metal from the positive electrode at high temperature is suppressed by optionally forming a stable film with low resistance on the surface of the positive electrode active material, which is not coated with a metallic element, in comparison to when the dinitrile-based compound is introduced alone, a battery with excellent high-temperature durability may be achieved.

Specifically, the lithium difluorophosphate and the dinitrile-based compound may be included in a weight ratio of 1:0.25 to 1:2.

As described above, the lithium secondary battery of the present disclosure includes a core including the lithium cobalt-based oxide represented by Formula 1; and a shell including the lithium cobalt-based oxide represented by Formula 2 which is disposed on the surface of the core, wherein, since a thin, low-resistance, stable passive film is formed on the surface of the positive electrode by using the positive electrode, which includes a positive electrode active material containing at least one doping element selected from the group consisting of Al, Zr, Mg, and Ti in the core and the shell, in combination with the non-aqueous electrolyte solution including the lithium difluorophosphate and the dinitrile-based compound as an additive, the resistance of the surface of the positive electrode may be reduced and an effect of improving the durability may be achieved by suppressing the side reaction during high-temperature storage at the same time. Thus, the capacity characteristics and high-temperature durability of the lithium secondary battery may be maximized.

**(4-5) Other Additives**

The non-aqueous electrolyte solution of the present disclosure may further include other additives, which may form a stable film on the surfaces of the negative electrode and the positive electrode without significantly increasing initial resistance along with the effect of the additive by being used together with the first and second additives, or may act as a complementary agent to suppress the decomposition of the solvent in the non-aqueous electrolyte solution and improve the mobility of the lithium ions.

These other additives are not particularly limited as long as they may form a stable film on the surfaces of the positive electrode and negative electrode, but, as a representative example, the other additives may include at least one additive selected from the group consisting of a cyclic carbonate-based compound, a halogen-substituted carbonate-based compound, a sultone-based compound, a nitrile-based compound, a phosphate-based compound, a borate-based compound, and a lithium salt-based compound.

Specifically, the cyclic carbonate-based compound may improve durability of the battery by forming a stable SEI film mainly on the surface of the negative electrode during battery activation. The cyclic carbonate-based compound may include vinylene carbonate (VC) or vinyl ethylene carbonate (VEC), and may be included in an amount of 3 wt% or less based on the total weight of the non-aqueous electrolyte solution. In a case in which the amount of the cyclic carbonate-based compound in the non-aqueous electrolyte solution is greater than 3 wt%, cell swelling inhibition performance and initial resistance may be degraded.

The halogen-substituted carbonate-based compound may include fluoroethylene carbonate (FEC), and may be present in an amount of 5 wt% or less based on the total weight of the non-aqueous electrolyte solution. In a case in which the amount of the halogen-substituted carbonate-based compound is greater than 5 wt%, the cell swelling inhibition performance may be degraded.

Also, the sultone-based compound, for example, may be at least one compound selected from the group consisting of 1,3-propane sultone (PS), 1,4-butane sultone, ethene sultone, 1,3-propene sultone (PRS), 1,4-butene sultone, and 1-methyl-1,3-propene sultone.

Furthermore, the nitrile-based compound may include at least one compound selected from the group consisting of succinonitrile (SN), adiponitrile (Adn), acetonitrile, propionitrile, butyronitrile, valeronitrile, caprylonitrile, heptanenitrile,cyclopentanecarbonitrile, hexanetricarbonitrile (HTCN),cyclohexanecarbonitrile, 2-fluorobenzonitrile, 4-fluorobenzonitrile, difluorobenzonitrile, trifluorobenzonitrile,phenylacetonitrile, 2-fluorophenylacetonitrile, and 4-fluorophenylacetonitrile.

The nitrile-based compound may act as a complementary agent to form an SEI film of the negative electrode, may act to suppress the decomposition of the solvent in the electrolyte, and may act to improve the mobility of the lithium ions. The nitrile-based compound may be present in an amount of 8 wt% or less based on the total weight of the non-aqueous electrolyte solution. In a case in which the total amount of the nitrile-based compound in the non-aqueous electrolyte solution is greater than 8 wt%, since the film formed on the surface of the electrode is increased to increase the resistance, battery performance may be degraded.

Also, since the phosphate-based compound stabilizes $PF_6$ anions in the electrolyte and helps to form the positive electrode and negative electrode films, the durability of the battery may be improved. The phosphate-based compound may include at least one compound selected from the group consisting of lithium difluoro(bisoxalato)phosphate (LiDFOP), tris(trimethylsilyl) phosphate, tris(trimethylsilyl) phosphite,tris(2,2,2-trifluoroethyl)phosphate, and tris(trifluoroethyl)phosphite, and may be present in an amount of 3 wt% or less based on the total weight of the non-aqueous electrolyte solution.

The borate-based compound may improve the mobility of the lithium ions by promoting ion-pair separation of the lithium salt, may reduce interfacial resistance of the SEI film, and may solve problems, such as hydrofluoric acid gas generation, by dissociating a material, such as LiF, which is formed during a battery reaction and is not well separated. The borate-based compound may include lithium bis(oxalato)borate (LiBOB, $LiB(C_2O_4)_2$), lithium oxalyldifluoroborate (LiODFB), or tetramethyl trimethylsilylborate (TMSB), and may be included in an amount of 3 wt% or less based on

the total weight of the non-aqueous electrolyte solution.

Furthermore, the lithium salt-based compound is a compound different from the lithium salt included in the non-aqueous electrolyte solution, wherein the lithium salt-based compound may include $LiBF_4$, and may be present in an amount of 3 wt% or less based on the total weight of the non-aqueous electrolyte solution.

Two or more other additives may be mixed and used, and the other additives may be present in an amount of 10 wt% or less, particularly 0.01 wt% to 10 wt%, and preferably 0.1 wt% to 5.0 wt% based on the total weight of the electrolyte.

If the amount of the other additives is less than 0.01 wt%, high-temperature storage characteristics and gas reduction effect to be achieved from the additives are insignificant, and, if the amount of the other additives is greater than 10 wt%, there is a possibility that the side reaction in the electrolyte occurs excessively during charge and discharge of the battery. Particularly, since the other additives may not be sufficiently decomposed when an excessive amount of the other additives is added, the other additives may be present in the form of an unreacted material or precipitates in the electrolyte at room temperature. Accordingly, since the resistance is increased, the life characteristics of the secondary battery may be degraded.

Since the non-aqueous electrolyte solution of the present disclosure optionally forms a highly durable film on the surface of the positive electrode active material by including the additive of a specific composition, a lithium secondary battery having improved cycle characteristics and output characteristics as well as high-temperature durability may be achieved by preventing the dissolution of the transition metal from the positive electrode, securing the structural stability of the positive electrode active material, and simultaneously preventing a continuous decomposition reaction of the electrolyte solution.

In the present disclosure, a lithium secondary battery with more improved cycle characteristics and output characteristics may be provided by including the positive electrode, which includes the lithium cobalt-based oxide containing the doping element in a specific concentration range as the positive electrode active material, and the non-aqueous electrolyte solution including the additive capable of forming a highly durable film on the surface of the electrode. The lithium secondary battery according to the present disclosure is suitable for portable devices, such as mobile phones, notebook computers, and digital cameras, and electric cars such as hybrid electric vehicles (HEVs).

Hereinafter, examples of the present disclosure will be described in detail in such a manner that it may easily be carried out by a person with ordinary skill in the art to which the present disclosure pertains. The invention may, however, be embodied in many different forms and should not be construed as being limited to the examples set forth herein.

## [Examples]

### Example 1.

#### (Non-aqueous Electrolyte Solution Preparation)

After $LiPF_6$ was dissolved in a non-aqueous organic solvent, in which ethylene carbonate (EC) :propylene carbonate (PC) :ethyl propionate (EP) :propyl propionate (PP) were mixed in a weight ratio of 20:10:25:45, such that a concentration of the $LiPF_6$ was 1.2 M, a non-aqueous electrolyte solution was prepared by adding 0.25 wt% of lithium difluorophosphate (hereinafter, abbreviated as "LiDFP"), 0.5 wt% of 1,4-dicyano-2-butene (hereinafter, abbreviated as "DCB"), and 16.5 wt% of other additives (0.5 wt% of vinyl ethylene carbonate (VEC), 4 wt% of 1,3-propane sultone (PS), 7 wt% of fluoroethylene carbonate (FEC), 1.5 wt% of succinonitrile (SN), 3 wt% of hexanetricarbonitrile (HTCN), 0.3 wt% of lithium oxalyldifluoroborate (LiODFB), and 0.2 wt% of $LiBF_4$) (see Table 1 below) .

#### (Positive Electrode Preparation)

#### (i) Positive Electrode Active Material Preparation

$LiCoO_2$ powder, $Al(NO_3)_3 \cdot 9H_2O$, $Zr(NO_3)_2 \cdot xH_2O$ (x is an integer of 1 to 6), MgO, and $TiO_2$ were mixed in a weight ratio of 1:0.085:0.0015:0.0026:0.0006, and a first heat treatment was then performed at 900°C for 3 hours or more.

Then, the product obtained in the first heat treatment, $LiCoO_2$ powder, $Al(NO_3)_3 \cdot 9H_2O$, $Zr(NO_3)_2 \cdot xH_2O$ (x is an integer of 1 to 6), MgO, and $TiO_2$ were mixed in a weight ratio of 1:0.0085:0.00015:0.00026:0.00006, and a secondary heat treatment was then performed at 900°C for 3 hours or more to prepare a positive electrode active material in which a shell portion (Li/(Co+M) ratio = 0.94) formed of $Li_{0.94}Co_{0.99848}Al_{0.00113}Zr_{0.00003}Mg_{0.00031}Ti_{0.00005}O_2$ was formed on a surface of a core portion (Li/(Co+M) ratio = 1.02) formed of $Li_{1.02}Co_{0.9849}Al_{0.0113}Zr_{0.0003}Mg_{0.0031}Ti_{0.0004}O_2$.

In this case, doping elements in the positive electrode active material, that is, an amount of Al was 0.52 wt%, an amount of Zr was 0.05 wt%, an amount of Mg was 0.13 wt%, and an amount of Ti was 0.03 wt%.

**(ii) Positive Electrode Preparation**

The above-prepared positive electrode active material, a conductive agent (carbon black), and a binder (polyvinylidene fluoride) were added in a weight ratio of 97.5:1:1.5 to N-methyl-2-pyrrolidone (NMP), as a solvent, to prepare a positive electrode active material slurry (solid content concentration 60 wt%). A 15um thick positive electrode collector (Al thin film)was coated with the positive electrode active material slurry, dried, and then roll-pressed to prepare a positive electrode.

**(Negative Electrode Preparation)**

A negative electrode active material (graphite), a conductive agent (carbon black), and a binder (polyvinylidene fluoride) were added to distilled water in a weight ratio of 96:0.5:3.5to prepare a negative electrode active material slurry (solid content concentration50 wt%). An 8um thick negative electrode collector (Cu thin film) was coated with the negative electrode active material slurry, dried, and then roll-pressed to prepare a negative electrode.

**(Secondary Battery Preparation)**

After an electrode assembly was prepared by stacking a polyethylene porous film, as a separator, with the positive electrode and negative electrode prepared by the above-described methods, the electrode assembly was put in a battery case, 5 mL of the non-aqueous electrolyte solution was injected thereinto, and the battery case was sealed to prepare a pouch-type lithium secondary battery (battery capacity 6.24 mAh).

**Example 2.**

A lithium secondary battery was prepared in the same manner as in Example 1 except that, after $LiPF_6$ was dissolved in a non-aqueous organic solvent such that a concentration of the $LiPF_6$ was 1.2 M, a non-aqueous electrolyte solution was prepared by adding 0.5 wt% of LiDFP, 0.5 wt% of DCB, and 16.5 wt% of other additives.

**Example 3.**

A lithium secondary battery was prepared in the same manner as in Example 1 except that, after $LiPF_6$ was dissolved in a non-aqueous organic solvent such that a concentration of the $LiPF_6$ was 1.2 M, a non-aqueous electrolyte solution was prepared by adding 1.0 wt% of LiDFP, 0.5 wt% of DCB, and 16.5 wt% of other additives.

**Example 4.**

A lithium secondary battery was prepared in the same manner as in Example 1 except that, after $LiPF_6$ was dissolved in a non-aqueous organic solvent such that a concentration of the $LiPF_6$ was 1.2 M, a non-aqueous electrolyte solution was prepared by adding 1.5 wt% of LiDFP, 0.5 wt% of DCB, and 16.5 wt% of other additives.

**Example 5.**

A lithium secondary battery was prepared in the same manner as in Example 1 except that, after $LiPF_6$ was dissolved in a non-aqueous organic solvent such that a concentration of the $LiPF_6$ was 1.2 M, a non-aqueous electrolyte solution was prepared by adding 0.255 wt% of LiDFP, 0.5 wt% of DCB, and 16.5 wt% of other additives.

**Example 6.**

A lithium secondary battery was prepared in the same manner as in Example 1 except that, after $LiPF_6$ was dissolved in a non-aqueous organic solvent such that a concentration of the $LiPF_6$ was 1.2 M, a non-aqueous electrolyte solution was prepared by adding 1.0 wt% of LiDFP, 2.0 wt% of DCB, and 16.5 wt% of other additives.

**Example 7.**

A lithium secondary battery was prepared in the same manner as in Example 1 except that, after $LiPF_6$ was dissolved in a non-aqueous organic solvent such that a concentration of the $LiPF_6$ was 1.2 M, a non-aqueous electrolyte solution was prepared by adding 1.5 wt% of LiDFP, 3.0 wt% of DCB, and 16.5 wt% of other additives.

**Example 8.**

**(Positive Electrode Preparation)**

**(i) Positive Electrode Active Material Preparation**

$LiCoO_2$ powder, $Al(NO_3)_3 \cdot 9H_2O$, $Zr(NO_3)_2 \cdot xH_2O$ (x is an integer of 1 to 6), MgO, and $TiO_2$ were mixed in a weight ratio of 1:0.078:0.00064:0.0022:0.0005, and a first heat treatment was then performed at 900°C for 3 hours or more.

Then, the product obtained in the first heat treatment, $LiCoO_2$ powder, $Al(NO_3)_3 \cdot 9H_2O$, $Zr(NO_3)_2 \cdot xH_2O$ (x is an integer of 1 to 6), MgO, and $TiO_2$ were mixed in a weight ratio of 1:0.0078:0.000064:0.00022:0.00005, and a secondary heat treatment was then performed at 900°C for 3 hours or more to prepare a positive electrode active material in which a shell portion (Li/(Co+M) ratio = 0.94) formed of $Li_{0.94}Co_{0.9985}Al_{0.00113}Zr_{0.00002}Mg_{0.00031}Ti_{0.00004}O_2$ was formed on a surface of a core portion (Li/(Co+M) ratio = 1.02) formed of $Li_{1.02}Co_{0.9851}Al_{0.0113}Zr_{0.0002}Mg_{0.0031}Ti_{0.0004}O_2$.

In this case, doping elements in the positive electrode active material, that is, an amount of Al was 0.52 wt%, an amount of Zr was 0.025 wt%, an amount of Mg was 0.13 wt%, and an amount of Ti was 0.03 wt%.

**(ii) Positive Electrode Preparation**

The above-prepared positive electrode active material, a conductive agent (carbon black), and a binder (polyvinylidene fluoride) were added in a weight ratio of 97.5:1:1.5 to N-methyl-2-pyrrolidone (NMP), as a solvent, to prepare a positive electrode active material slurry (solid content concentration 60 wt%). A 15um thick positive electrode collector (Al thin film)was coated with the positive electrode active material slurry, dried, and then roll-pressed to prepare a positive electrode.

**(Secondary Battery Preparation)**

A lithium secondary battery was prepared in the same manner as in Example 1 except that the above-prepared positive electrode was used.

**Example 9.**

**(Positive Electrode Preparation)**

**(i) Positive Electrode Active Material Preparation**

$LiCoO_2$ powder, $Al(NO_3)_3 \cdot 9H_2O$, $Zr(NO_3)_2 \cdot xH_2O$ (x is an integer of 1 to 6), MgO, and $TiO_2$ were mixed in a weight ratio of 1:0.078:0.0022:0.0022:0.0005, and a first heat treatment was then performed at 900°C for 3 hours or more.

Then, the product obtained in the first heat treatment, $LiCoO_2$ powder, $Al(NO_3)_3 \cdot 9H_2O$, $Zr(NO_3)_2 \cdot xH_2O$ (x is an integer of 1 to 6), MgO, and $TiO_2$ were mixed in a weight ratio of 1:0.0078:0.00022:0.00022:0.00005, and a secondary heat treatment was then performed at 900°C for 3 hours or more to prepare a positive electrode active material in which a shell portion (Li/(Co+M) ratio = 0.94) formed of $Li_{0.94}Co_{0.9985}Al_{0.0011}Zr_{0.00005}Mg_{0.00031}Ti_{0.00004}O_2$ was formed on a surface of a core portion (Li/(Co+M) ratio = 1.02) formed of $Li_{1.02}Co_{0.9847}Al_{0.0113}Zr_{0.0005}Mg_{0.0031}Ti_{0.0004}O_2$.

In this case, doping elements in the positive electrode active material, that is, an amount of Al was 0.52 wt%, an amount of Zr was 0.085 wt%, an amount of Mg was 0.13 wt%, and an amount of Ti was 0.03 wt%.

**(ii) Positive Electrode Preparation**

The above-prepared positive electrode active material, a conductive agent (carbon black), and a binder (polyvinylidene fluoride) were added in a weight ratio of 97.5:1:1.5 to N-methyl-2-pyrrolidone (NMP), as a solvent, to prepare a positive electrode active material slurry (solid content concentration 60 wt%). A 15um thick positive electrode collector (Al thin film)was coated with the positive electrode active material slurry, dried, and then roll-pressed to prepare a positive electrode.

**(Secondary Battery Preparation)**

A lithium secondary battery was prepared in the same manner as in Example 1 except that the above-prepared positive electrode was used.

**Comparative Example 1.**

A lithium secondary battery was prepared in the same manner as in Example 1 except that, after $LiPF_6$ was dissolved in a non-aqueous organic solvent such that a concentration of the $LiPF_6$ was 1.2 M, a non-aqueous electrolyte solution was prepared by adding 1.5 wt% of LiDFP and 16.5 wt% of other additives.

**Comparative Example 2.**

A lithium secondary battery was prepared in the same manner as in Example 1 except that, after $LiPF_6$ was dissolved in a non-aqueous organic solvent such that a concentration of the $LiPF_6$ was 1.2 M, a non-aqueous electrolyte solution was prepared by adding 0.5 wt% of DCB and 16.5 wt% of other additives.

**Comparative Example 3.**

(Positive Electrode Preparation)

A positive electrode active material ($LiCoO_2$), a conductive agent (carbon black), and a binder (polyvinylidene fluoride) were added in a weight ratio of 97.5:1:1.5 to N-methyl-2-pyrrolidone (NMP), as a solvent, to prepare a positive electrode active material slurry (solid content concentration 60 wt%). A 15um thick positive electrode collector (Al thin film) was coated with the positive electrode active material slurry, dried, and then roll-pressed to prepare a positive electrode.

**(Secondary Battery Preparation)**

A lithium secondary battery was prepared in the same manner as in Example 1 except that the above-prepared positive electrode was used.

**Comparative Example 4.**

(Positive Electrode Preparation)

A positive electrode active material ($Li(Ni_{0.6}Co_{0.2}Mn_{0.2})O_2$; NCM622) , a conductive agent (carbon black), and a binder (polyvinylidene fluoride) were added in a weight ratio of 97.5:1:1.5 to N-methyl-2-pyrrolidone (NMP), as a solvent, to prepare a positive electrode active material slurry (solid content concentration 60 wt%). A 15μm thick positive electrode collector (Al thin film)was coated with the positive electrode active material slurry, dried, and then roll-pressed to prepare a positive electrode.

**(Secondary Battery Preparation)**

A lithium secondary battery was prepared in the same manner as in Example 1 except that the above-prepared positive electrode was used.

**Experimental Examples**

**Experimental Example 1. Initial Capacity Evaluation**

Each of the lithium secondary batteries prepared in Examples 1 to 9 and the lithium secondary batteries prepared in Comparative Examples 1 to 4 was activated at a CC of 0.1 C. Subsequently, each lithium secondary battery was charged at a CC of 0.5 C to 4.5 V under a constant current-constant voltage (CC-CV) charging condition using PESC05-0.5 charge/discharge equipment (manufacturer: PNE SOLUTION Co., Ltd., 5 V, 500mA)at room temperature, then subjected to 0.05 C current cut-off, and discharged at 0.5 C under a CC condition to 2.5 V. After the above charging and discharging were defined as one cycle and three cycles were performed, third discharge capacity was selected as initial capacity and presented in Table 1 below.

**Experimental Example 2.High-temperature Cycle Evaluation**

After one cycle of charging of each of the lithium secondary batteries prepared in Examples 1 to 9 and the lithium secondary batteries prepared in Comparative Examples 1 to 4 at 0.33 C rate to 4.2 V under a constant current/constant voltage condition at 45°Cand then discharging of each lithium secondary battery at 0.33 C rate under a constant current

condition to 3 V was performed, initial discharge capacity and initial resistance after one cycle were measured.

Then, after performing 200 cycles of charging and discharging under the above one cycle condition, a capacity retention (%) and a resistance value (mohm) were measured. The capacity retention (%) was calculated according to the following Equation1, and measurement results are listed in Table 1 below.

Capacity retention (%) = (discharge capacity after 200 cycles/discharge capacity after one cycle) × 100 [Equation 1]

[Table 1]

| | Initial capacity (mAh) | Capacity retention after 200 cycles (%) | Resistance value after 200 cycles (mohm) |
|---|---|---|---|
| Example 1 | 3090.6 | 91.1 | 16.9 |
| Example2 | 3098.9 | 92.8 | 16.3 |
| Example3 | 3091.4 | 91.8 | 15.8 |
| Example4 | 3098.2 | 92.3 | 15.4 |
| Example5 | 3097.2 | 92.1 | 16.8 |
| Example 6 | 3091.8 | 90.9 | 17.2 |
| Example 7 | 3080.9 | 89.7 | 18.8 |
| Example 8 | 3069.1 | 82.5 | 19.3 |
| Example 9 | 3051.8 | 87.9 | 20.4 |
| Comparative Example1 | 2988.6 | 73.5 | 45.7 |
| Comparative Example2 | 3004.3 | 78.4 | 43.9 |
| Comparative Example3 | 2887.5 | 60.3 | 88.9 |
| Comparative Example 4 | 2706.3 | 38.5 | 130.7 |

Referring to Table 1, with respect to the secondary batteries of Examples 1 to 9 of the present disclosure, it may be understood that initial capacities and capacity retentions (%) and resistance values after 200 cycles at a high temperature (45°C) were improved in comparison to those of the secondary batteries of Comparative Examples 1 to 4.

**Experimental Example 3.High-temperature Storage Evaluation**

After each of the lithium secondary batteries prepared in Examples 1 to 9 and the lithium secondary batteries prepared in Comparative Examples 1 to 4 was charged at 0.33 C rate to 4.2 V under a constant current/constant voltage condition at room temperature (25°C), each lithium secondary battery was discharged to a depth of discharge (DOD) of 50% to adjust a state of charge (SOC) to 50% and then discharged at 2.5 C rate for 10 seconds to measure initial capacity.

Then, each lithium secondary battery was stored at 85°C for 8 hours, and then discharged, charged, and discharged at 0.33 C to evaluate recovery capacity, and the results thereof are presented in Table 2 below.

[Table 2]

| | Initial capacity (mAh) | Recovery capacity (%) |
|---|---|---|
| Example 1 | 3090.3 | 92.8 |
| Example2 | 3098.7 | 94.7 |
| Example3 | 3091.9 | 94.0 |
| Example4 | 3098.1 | 94.2 |
| Example5 | 3097.3 | 93.1 |
| Example 6 | 3091.5 | 92.1 |
| Example 7 | 3080.0 | 92.9 |

(continued)

| | Initial capacity (mAh) | Recovery capacity (%) |
|---|---|---|
| Example 8 | 3072.8 | 83.5 |
| Example 9 | 3061.9 | 87.3 |
| Comparative Example1 | 2989.9 | 75.8 |
| Comparative Example2 | 3005.8 | 79.3 |
| Comparative Example3 | 2885.3 | 67.3 |
| Comparative Example 4 | 2709.5 | 55.7 |

Referring to Table 2, with respect to the secondary batteries of Examples 1 to 9 of the present disclosure, it may be understood that initial capacities and recovery capacities (%) were improved in comparison to those of the secondary batteries of Comparative Examples 1 to 4.

**Experimental Example 4. Metal Dissolution Amount Evaluation**

After the lithium secondary batteries prepared in Examples 1 to 9 and the lithium secondary batteries prepared in Comparative Examples 1 to 4 were stored at 85°C for 8 hours and then disassembled in a fully discharged state to analyze amounts of Ni, Co, and Mn which were precipitated on the negative electrode (ICP-OES, Perkin Elmer, AVIO 500), and the results thereof are presented in Table 3 below. (unit of dissolved metal amount: ppm).

[Table 3]

| | Total metal (Ni, Co, Mn) dissolution amount (ppm) |
|---|---|
| Example 1 | 342 |
| Example2 | 328 |
| Example3 | 310 |
| Example4 | 302 |
| Example5 | 295 |
| Example 6 | 271 |
| Example 7 | 255 |
| Example 8 | 516 |
| Example 9 | 467 |
| Comparative Example1 | 907 |
| Comparative Example2 | 856 |
| Comparative Example3 | 2589 |
| Comparative Example 4 | 3374 |

Referring to Table 3, with respect to the secondary batteries of Examples 1 to 9 of the present disclosure, it may be confirmed that metal ion dissolution amounts after high-temperature storage were reduced in comparison to those of the secondary batteries of Comparative Examples 1 to 4.

Particularly, with respect to the lithium secondary batteries of Comparative Examples 1 and 2 which included the non-aqueous electrolyte solutions not containing the additive composition of the present disclosure, since the formation of a polymer film on the positive electrode and the formation of a film through strong adsorption were not possible, it may be confirmed that the dissolution of the transition metals was significantly increased in comparison to that of the lithium secondary batteries of Examples 1 to 9.

Referring to these results, with respect to the lithium secondary batteries using the non-aqueous electrolyte solution of the present disclosure together, it may be understood that the capacity retention (%) after cycles and an effect of suppressing metal dissolution were improved and the resistance value was reduced.

Although the exemplary embodiments of the present disclosure have been described in detail, the scope of the

present disclosure is not limited thereto

## Claims

1. A lithium secondary battery comprising:

a positive electrode including a positive electrode active material,
a negative electrode including a negative electrode active material,
a separator disposed between the positive electrode and the negative electrode, and
a non-aqueous electrolyte solution for a lithium secondary battery,
wherein the positive electrode active material comprises a core including a lithium cobalt-based oxide represented by Formula 1; and a shell including a lithium cobalt-based oxide represented by Formula 2 which is disposed on a surface of the core, wherein the core and the shell include at least one doping element selected from the group consisting of aluminum (Al), zirconium (Zr), magnesium (Mg), and titanium (Ti), and
the non-aqueous electrolyte solution comprises a lithium salt, an organic solvent, lithium difluorophosphate, and a dinitrile-based compound represented by Formula 3.

[Formula 1] $Li_aCo_{1-b}M_bO_2$

wherein, in Formula 1,
M is at least one selected from the group consisting of Al, Zr, Mg, and Ti, and
$1 \leq a \leq 1.2$ and $0.005 \leq b \leq 0.05$;

[Formula 2] $Li_xCo_{1-y}M^1{}_yO_2$

wherein, in Formula 2,
$M^1$ is at least one selected from the group consisting of Al, Zr, Mg, and Ti, and
$0.5 \leq x < 1$and $0 \leq y \leq 0.002$;

[Formula 3]

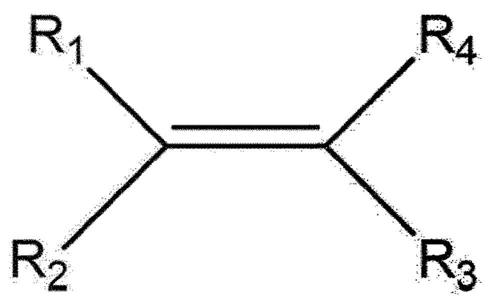

wherein, in Formula 3,
$R^1$, $R^2$, $R^3$, and $R^4$ are each independently hydrogen, an alkyl group having 1 to 10 carbon atoms, or -R-CN, wherein R is an alkylene group having 1 to 12 carbon atoms,
at least one of $R^1$ and $R^2$ is -R-CN, and
at least one of $R^3$ and $R^4$ is -R-CN.

2. The lithium secondary battery of claim 1, wherein the doping element is present in a concentration gradient that decreases from a center of the core toward an interface between the core and the shell.

3. The lithium secondary battery of claim 1, wherein the doping element comprises zirconium (Zr), and optionally further comprises at least one selected from the group consisting of aluminum (Al), magnesium (Mg), and titanium (Ti).

4. The lithium secondary battery of claim 1, wherein the zirconium (Zr) among the doping elements is present in an amount of 0.025 wt% to 0.085 wt% based on a total weight of the positive electrode active material.

5. The lithium secondary battery of claim 4, wherein the zirconium (Zr) among the doping elements is present in an

amount of 0.03 wt% to 0.08 wt% based on the total weight of the positive electrode active material.

**6.** The lithium secondary battery of claim 1, wherein the aluminum (Al) among the doping elements is present in an amount of 0.5 wt% to 0.55 wt% based on a total weight of the positive electrode active material.

**7.** The lithium secondary battery of claim 1, wherein the magnesium (Mg) among the doping elements is present in an amount of 0.1 wt% to 0.15 wt% based on a total weight of the positive electrode active material.

**8.** The lithium secondary battery of claim 1, wherein the titanium (Ti) among the doping elements is present in an amount of 0.01 wt% to 0.05 wt% based on a total weight of the positive electrode active material.

**9.** The lithium secondary battery of claim 1, wherein the lithium difluorophosphate is present in an amount of 0.1 wt% to 1.5 wt% based on a total weight of the non-aqueous electrolyte solution for a lithium secondary battery.

**10.** The lithium secondary battery of claim 1, wherein -R-CN groups in the dinitrile-based compound are in a trans position with each other.

**11.** The lithium secondary battery of claim 1, wherein the dinitrile-based compound is at least one selected from the group consisting of 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, and 1,6-dicyano-2-methyl-5-methyl-3-hexene.

**12.** The lithium secondary battery of claim 1, wherein the dinitrile-based compound is 1,4-dicyano-2-butene.

**13.** The lithium secondary battery of claim 1, wherein a weight ratio of the lithium difluorophosphate to the dinitrile-based compound is in a range of 1:0.25 to 1:3.

**14.** The lithium secondary battery of claim 1, wherein a weight ratio of the lithium difluorophosphate to the dinitrile-based compound is in a range of 1:0.25 to 1:2.

**Patentansprüche**

**1.** Lithiumsekundärbatterie, umfassend:

eine positive Elektrode, die ein Positivelektrodenaktivmaterial enthält,
eine negative Elektrode, die ein Negativelektrodenaktivmaterial enthält,
einen Separator, der zwischen der positiven Elektrode und der negativen Elektrode angeordnet ist, und
eine nichtwässrige Elektrolytlösung für eine Lithiumsekundärbatterie,
wobei das Positivelektrodenaktivmaterial einen Kern, enthaltend ein Lithium-Cobalt-basiertes Oxid, dargestellt durch Formel 1; und eine Hülle, enthaltend ein Lithium-Cobalt-basiertes Oxid, dargestellt durch Formel 2, angeordnet auf einer Oberfläche des Kerns, umfasst, wobei der Kern und die Hülle mindestens ein Dotierungselement enthalten, das aus der Gruppe ausgewählt ist, die aus Aluminium (Al), Zirkonium (Zr), Magnesium (Mg) und Titan (Ti) besteht, und
die nichtwässrige Elektrolytlösung ein Lithiumsalz, ein organisches Lösungsmittel, Lithiumdifluorphosphat und eine Dinitril-basierte Verbindung, dargestellt durch Formel 3, umfasst.

[Formel 1] $Li_aCo_{1-b}M_bO_2$

wobei in Formel 1
M mindestens eines, ausgewählt aus der Gruppe, bestehend aus Al, Zr, Mg und Ti, ist, und
$1 \leq a \leq 1{,}2$ und $0{,}005 \leq b \leq 0{,}05$;

[Formel 2] $Li_xCo_{1-y}M^1{}_yO_2$

wobei in Formel 2
$M^1$ mindestens eines, ausgewählt aus der Gruppe, bestehend aus Al, Zr, Mg und Ti, ist, und
$0{,}5 \leq x < 1$ und $0 \leq y \leq 0{,}002$;

[Formel 3]

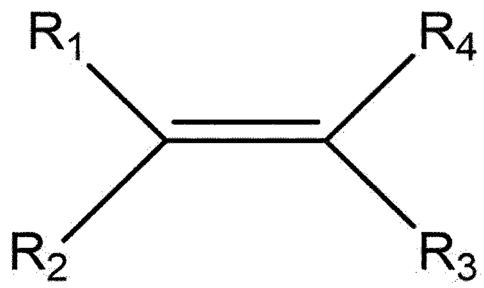

wobei in Formel 3
$R^1$, $R^2$, $R^3$ und $R^4$ jeweils unabhängig voneinander Wasserstoff, eine Alkylgruppe mit 1 bis 10 Kohlenstoffatomen oder -R-CN sind, worin R eine Alkylengruppe mit 1 bis 12 Kohlenstoffatomen ist,
mindestens eines von $R^1$ und $R^2$ -R-CN ist, und
mindestens eines von $R^3$ und $R^4$ -R-CN ist.

**2.** Lithiumsekundärbatterie gemäß Anspruch 1, wobei das Dotierungselement in einem Konzentrationsgradienten vorliegt, der von der Mitte des Kerns zu einer Grenzfläche zwischen dem Kern und der Hülle hin abnimmt.

**3.** Lithiumsekundärbatterie gemäß Anspruch 1, wobei das Dotierungselement Zirkonium (Zr) umfasst und optional mindestens ein weiteres, ausgewählt aus der Gruppe, bestehend aus Aluminium (Al), Magnesium (Mg) und Titan (Ti), umfasst.

**4.** Lithiumsekundärbatterie gemäß Anspruch 1, wobei das Zirkonium (Zr) unter den Dotierungselementen in einer Menge von 0,025 Gew.-% bis 0,085 Gew.-%, bezogen auf ein Gesamtgewicht des Positivelektrodenaktivmaterials, vorliegt.

**5.** Lithiumsekundärbatterie gemäß Anspruch 4, wobei das Zirkonium (Zr) unter den Dotierungselementen in einer Menge von 0,03 Gew.-% bis 0,08 Gew.-%, bezogen auf das Gesamtgewicht des Positivelektrodenaktivmaterials, vorliegt.

**6.** Lithiumsekundärbatterie gemäß Anspruch 1, wobei das Aluminium (Al) unter den Dotierungselementen in einer Menge von 0,5 Gew.-% bis 0,55 Gew.-%, bezogen auf ein Gesamtgewicht des Positivelektrodenaktivmaterials, vorliegt.

**7.** Lithiumsekundärbatterie gemäß Anspruch 1, wobei das Magnesium (Mg) unter den Dotierungselementen in einer Menge von 0,1 Gew.-% bis 0,15 Gew.-%, bezogen auf ein Gesamtgewicht des Positivelektrodenaktivmaterials, vorliegt.

**8.** Lithiumsekundärbatterie gemäß Anspruch 1, wobei das Titan (Ti) unter den Dotierungselementen in einer Menge von 0,01 Gew.-% bis 0,05 Gew.-%, bezogen auf ein Gesamtgewicht des Positivelektrodenaktivmaterials, vorliegt.

**9.** Lithiumsekundärbatterie gemäß Anspruch 1, wobei das Lithiumdifluorphosphat in einer Menge von 0,1 Gew.-% bis 1,5 Gew.-%, bezogen auf ein Gesamtgewicht der nichtwässrigen Elektrolytlösung für eine Lithiumsekundärbatterie, vorliegt.

**10.** Lithiumsekundärbatterie gemäß Anspruch 1, wobei -R-CN-Gruppen in der Dinitril-basierten Verbindung in einer trans-Position zueinander stehen.

**11.** Lithiumsekundärbatterie gemäß Anspruch 1, wobei die Dinitril-basierte Verbindung mindestens eine, ausgewählt aus der Gruppe, bestehend aus 1,4-Dicyano-2-buten, 1,4-Dicyano-2-methyl-2-buten, 1,4-Dicyano-2-ethyl-2-buten, 1,4-Dicyano-2,3-dimethyl-2-buten, 1,4-Dicyano-2,3-diethyl-2-buten, 1,6-Dicyano-3-hexen, 1,6-Dicyano-2-methyl-3-hexen und 1,6-Dicyano-2-methyl-5-methyl-3-hexen, ist.

**12.** Lithiumsekundärbatterie gemäß Anspruch 1, wobei die Dinitril-basierte Verbindung 1,4-Dicyano-2-buten ist.

**13.** Lithiumsekundärbatterie gemäß Anspruch 1, wobei ein Gewichtsverhältnis von Lithiumdifluorphosphat zu der Dinitril-basierten Verbindung im Bereich von 1:0,25 bis 1:3 liegt.

**14.** Lithiumsekundärbatterie gemäß Anspruch 1, wobei ein Gewichtsverhältnis von Lithiumdifluorphosphat zu der Dinitril-basierten Verbindung im Bereich von 1:0,25 bis 1:2 liegt.

## Revendications

**1.** Batterie secondaire au lithium comprenant :

une électrode positive incluant un matériau actif d'électrode positive,
une électrode négative incluant un matériau actif d'électrode négative,
un séparateur disposé entre l'électrode positive et l'électrode négative, et
une solution électrolytique non aqueuse pour une batterie secondaire au lithium,
dans laquelle le matériau actif d'électrode positive comprend un noyau incluant un oxyde à base de lithium cobalt représenté par la Formule 1 ; et une enveloppe incluant un oxyde à base de lithium cobalt représenté par la Formule 2, qui est disposée sur une surface du noyau, dans laquelle le noyau et l'enveloppe incluent au moins un élément dopant sélectionné parmi le groupe consistant en l'aluminium (Al), le zirconium (Zr), le magnésium (Mg) et le titane (Ti), et
la solution électrolytique non aqueuse comprend un sel de lithium, un solvant organique, du difluorophosphate de lithium et un composé à base de dinitrile représenté par la Formule 3.

[Formule 1] $Li_aCo_{1-b}M_bO_2$,

dans laquelle, dans la Formule 1,
M est au moins un élément sélectionné parmi le groupe consistant en Al, Zr, Mg et Ti, et
$1 \leq a \leq 1,2$ et $0,005 \leq b \leq 0,05$ ;

[Formule 2] $Li_xCo_{1-y}M^1_yO_2$ ,

dans laquelle, dans la Formule 2,
$M^1$ est au moins un élément sélectionné parmi le groupe consistant en Al, Zr, Mg et Ti, et
$0,5 \leq x < 1$ et $0 \leq y \leq 0,002$ ;

[Formule 3]

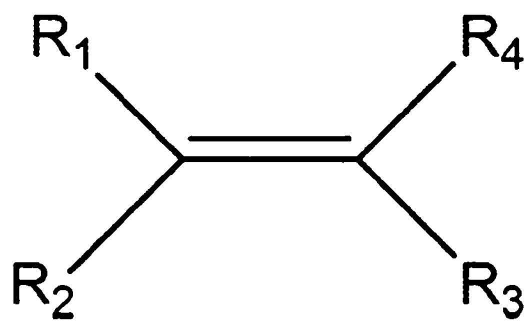

,

dans laquelle, dans la Formule 3,
$R^1$, $R^2$, $R^3$ et $R^4$ sont chacun indépendamment un hydrogène, un groupe alkyle présentant 1 à 10 atomes de carbone, ou -R-CN, dans lequel R est un groupe alkylène présentant 1 à 12 atomes de carbone,
au moins un de $R^1$ et $R^2$ est -R-CN, et
au moins un de $R^3$ et $R^4$ est -R-CN.

**2.** Batterie secondaire au lithium selon la revendication 1, dans laquelle l'élément dopant est présent selon un gradient de concentration qui décroît depuis un centre du noyau vers une interface entre le noyau et l'enveloppe.

3. Batterie secondaire au lithium selon la revendication 1, dans laquelle l'élément dopant comprend du zirconium (Zr), et comprend facultativement en outre au moins un élément sélectionné parmi le groupe consistant en l'aluminium (Al), le magnésium (Mg) et le titane (Ti).

4. Batterie secondaire au lithium selon la revendication 1, dans laquelle le zirconium (Zr) parmi les éléments dopants est présent dans une quantité de 0,025 % en poids à 0,085 % en poids sur la base d'un poids total du matériau actif d'électrode positive.

5. Batterie secondaire au lithium selon la revendication 4, dans laquelle le zirconium (Zr) parmi les éléments dopants est présent dans une quantité de 0,03 % en poids à 0,08 % en poids sur la base du poids total du matériau actif d'électrode positive.

6. Batterie secondaire au lithium selon la revendication 1, dans laquelle l'aluminium (Al) parmi les éléments dopants est présent dans une quantité de 0,5 % en poids à 0,55 % en poids sur la base d'un poids total du matériau actif d'électrode positive.

7. Batterie secondaire au lithium selon la revendication 1, dans laquelle le magnésium (Mg) parmi les éléments dopants est présent dans une quantité de 0,1 % en poids à 0,15 % en poids sur la base d'un poids total du matériau actif d'électrode positive.

8. Batterie secondaire au lithium selon la revendication 1, dans laquelle le titane (Ti) parmi les éléments dopants est présent dans une quantité de 0,01 % en poids à 0,05 % en poids sur la base d'un poids total du matériau actif d'électrode positive.

9. Batterie secondaire au lithium selon la revendication 1, dans laquelle le difluorophosphate de lithium est présent dans une quantité de 0,1 % en poids à 1,5 % en poids sur la base d'un poids total de la solution électrolytique non aqueuse pour une batterie secondaire au lithium.

10. Batterie secondaire au lithium selon la revendication 1, dans laquelle les groupes -R-CN dans le composé à base de dinitrile sont dans une position trans les uns par rapport aux autres.

11. Batterie secondaire au lithium selon la revendication 1, dans laquelle le composé à base de dinitrile est au moins un élément sélectionné parmi le groupe consistant en le 1,4-dicyano-2-butène, le 1,4-dicyano-2-méthyl-2-butène, le 1,4-dicyano-2-éthyl-2-butène, le 1,4-dicyano-2,3-diméthyl-2-butène, le 1,4-dicyano-2,3-diéthyl-2-butène, le 1,6-dicyano-3-hexène, le 1,6-dicyano-2-méthyl-3-hexène et le 1,6-dicyano-2-méthyl-5-méthyl-3-hexène.

12. Batterie secondaire au lithium selon la revendication 1, dans laquelle le composé à base de dinitrile est le 1,4-dicyano-2-butène.

13. Batterie secondaire au lithium selon la revendication 1, dans laquelle un rapport en poids entre le difluorophosphate de lithium et le composé à base de dinitrile se situe dans une plage allant de 1:0,25 à 1:3.

14. Batterie secondaire au lithium selon la revendication 1, dans laquelle un rapport en poids entre le difluorophosphate de lithium et le composé à base de dinitrile se situe dans une plage allant de 1:0,25 à 1:2.

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description

- CN 108598488 B
- CN 109461967 A
- WO 2021167360 A1
- KR 20210059233 A
- JP 5369568 B
- KR 20200141019 A
- US 2020259172 A1
- KR 20160040118 A
- KR 20170133949 A